# EUROPÄISCHE PATENTSCHRIFT

(11) **EP 0 750 652 B1**
(45) Veröffentlichungstag und Bekanntmachung des Hinweises auf die Patenterteilung: **28.07.1999**
(21) Anmeldenummer: 95910555.2
(22) Anmeldetag: 06.03.1995
(51) Int. Cl.: C09D 5/03, C09D 163/00, C09D 167/00

(54) **VERLAUFSMITTEL FÜR PULVERLACKE**
LEVELLING AGENTS FOR POWDERED PAINTS
PRODUITS NIVELANTS POUR LAQUES EN POUDRE

(30) Priorität: 15.03.1994 DE 4408656
(43) Veröffentlichungstag der Anmeldung: 02.01.1997
(73) Patentinhaber: Henkel Kommanditgesellschaft auf Aktien, 40191 Düsseldorf (DE)
(72) Erfinder: SCHULTE, Heinz-Günther, D-45481 Mülheim (DE); BIRNBRICH, Paul, D-42719 Solingen (DE); FROMMELIUS, Harald, D-40789 Monheim (DE)
(86) Internationale Anmeldenummer: EP9500819
(87) Internationale Veröffentlichungsnummer: WO9525144

(56) Entgegenhaltungen:
- WO-A-91/14745
- GB-A- 2 055 853
- JP-A- 56 036 551
- US-A- 3 932 358
- DATABASE WPI Week 8214 Derwent Publications Ltd., London, GB; AN 82-27620E & JP-A-57 036 165 (TEIJIN KK) , 26.Februar 1982
- CHEMICAL ABSTRACTS, vol. 110, no. 4, 23.Januar 1989 Columbus, Ohio, US; abstract no. 24836, & JP,A,63 118 360 (ASAHI CHEMICAL INDUSTRY) 23.Mai 1988

## Beschreibung

### Gebiet der Erfindung

Die Erfindung betrifft die Verwendung cyclische Iminoether-Gruppen enthaltende Verbindungen als. Verlaufsmittel für Pulverlacke.

### Stand der Technik

Lösungsmittelarme bzw. lösungsmittelfreie Beschichtungssysteme gewinnen zunehmend an Bedeutung. Zu der Gruppe dieser Beschichtungssysteme gehört die Pulverbeschichtung, also die Beschichtung von Metallen und Kunststoffen durch Auftrag und Sinterung von wärmehärtenden Pulvern. Sie können im Rotations-, im Pulverspritz-, im Wirbelsinterbad-Verfahren und vor allem durch elektrostatische Beschichtung aufgetragen werden. Zur elektrostatischen Pulverbeschichtung eignen sich besonders duroplastische Pulverlacke aus Epoxid-, Polyester- und Acrylharzen. Beim Wirbelsintern werden Thermoplasten aus Polyamid, Polyester, Polyethylen, Polyethylenvinylacetat, Polyvinylchlorid und Polyepoxiden bevorzugt eingesetzt. Die Pulverbeschichtung wird vor allem bei Maschinenteilen und Haushaltsgeräten (z.B. Stahlmöbel) angewendet. Um das Verlaufen der Kunststoffpulver beim Einbrennen oder Sintern zu fördern, werden ihm Verlaufsmittel zugesetzt, so daß beim Auftragen entstehende Unebenheiten wie Streifen, Blasen, Krater, Orangenschalen-Strukturen und Nadelstiche weitgehend ausgeglichen werden. Als Verlaufsmittel sind u.a. Acrylatcopolymere bekannt. Dabei handelt es sich im allgemeinen um flüssige Produkte auf Polyacrylatbasis, wie z.B. die Handelsprodukte Perenol (R) F 40, Perenol (R) F 30 P mod (Firma Henkel) oder Modaflow (R) (Firma Monsanto), die grundsätzlich auf zwei verschiedene Arten in die Pulverlacke eingearbeitet werden können:
1. Man stellt einen sogenannten "Master-Batch" her, wobei das flüssige Verlaufsmittel in eine Bindemittelkomponente des Pulverlackes eingeschmolzen wird. Die erstarrte Schmelze wird anschließend gebrochen und für die weitere Verarbeitung konfektioniert.
2. Es wird ein inerter Träger für die flüssigen Produkte verwendet, z.B. Kieselsäure.

Nachteil der Master-Batch-Technologie ist, daß man in der Formulierung von Pulverlacken eingeschränkt ist, da das Bindemittel des Master-Batch mit dem Hauptbindemittel der Formulierung identisch oder mindestens verträglich sein muß.

Auf einen Träger aufgezogene Verlaufmittel können wegen der Unverträglichkeit des meist anorganischen Trägers mit dem Lackfilm zu einer Glanzverminderung des Lackes und zu einer Beeinträchtigung der Transparenz bei Klarlacken sowie unter ungünstigen Umständen zu einer Herabsetzung der Lagerstabilität des Pulverlackes führen.

Außerdem können mit beiden Methoden keine festen Verlaufsmittel mit 100 Gew. % Aktivsubstanz hergestellt werden. Um diese Nachteile zu beseitigen, wurden pulverförmige Verlaufsmittel auf Basis von Polyacrylaten entwickelt, insbesondere für die Klarlack-Herstellung, die weder einen inerten Träger noch ein Master-Batch-Verfahren erfordern. Ein derartiges Verlaufmittel ist z.B. in der EP-A1 0 355 676 beschrieben. Nachteilig an diesen festen Polyacrylaten ist, daß die mit geringen Mengen erreichbare Verlaufsverbesserung nicht ausreicht und bei Verwendung höherer Mengen zwar ausreichende Verlaufseigenschaften, aber trübe Filme resultieren.
Außerdem sind die Erweichungstemperaturen noch so niedrig, daß die Verlaufsmittel nach längerer Lagerung verklumpen können.

Cyclische Iminoether sind z.B. aus der Encyclopedia of Polymer Science and Technology, Supplement Vol 1, S. 220, Ed.: H.F. Mark, N.M. Bikales, 1976, Wiley, New York, bekannt. Sie stellen cyclische Verbindungen mit einer -N=C-O- Gruppe dar. Besonders gut untersucht sind die 2-Oxazoline und die 5,6-Dihydro-4H-1,3-oxazine. JP-A-57 036 165 (Derwent Abstract) offenbart Pulverlacke enthaltend 100 Teile eines Epoxyharzes und 1-50 Teile eines speziellen cyclischen Iminoethers. Die Verwendung dieses Iminoethers als Verlaufsmittel für Pulverlacke ist nicht offenbart.

Die Herstellung von mit langkettigen Alkylgruppen substituierten Oxazolinen wird z.B. in der EP-A1 315 856 beschrieben.

Auch in 2-Stellung substituierte 5,6-Dihydro-4H-1,3-oxazine, im folgenden Oxazine genannt, sind bekannte Verbindungen, deren Synthese z.B. in der DE-A1 39 14 155 beschrieben ist.

Auch Verbindungen, die mehr als eine cylische Iminoether-Gruppe im Molekül besitzen, sind bekannt, z.B. aus der DE-A1 39 15 874. GB-A-2 055 853 nennt eine Pulverlackzusammensetzung, die unter anderem eine Verbindung mit mindestens zwei Oxazolingruppen enthält. Über Verlaufsmittel ist jedoch nichts offenbart.

Es ist auch bekannt, die Oxazoline oder Oxazine mit protischen Säuren, Lewis-Säuren oder Alkylierungsmitteln umzusetzen, z.B. aus der Encyclopedia of Polymer Science and Technology, Supplement Vol 1, S. 223, Ed.: H.F. Mark, N.M. Bikales, 1976, Wiley, New York und der dort zitierten Literatur. Der Angriff der Säuren oder der Alkylierungsmittel erfolgt am Stickstoff-Atom. Auf diese Weise entstehen bei der Verwendung von protischen Säuren oder Alkylierungsmitteln Salze.

Die Aufgabe der Erfindung ist es, feste Verlaufsmittel mit 10 bis 100 Gew.%, bevorzugt mit 100 Gew.% Aktivsubstanzgehalt zur Verfügung zu stellen, die sich leicht in Pulverlacke einarbeiten lassen, im fertigen Pulverlack auch nach längerer Zeit nicht zum Verkleben des Pulvers führen und beim Einbrennen trübungsfreie oder glänzende Filme bilden.

Es wurde gefunden, daß cyclische Iminoether und deren Homologe oder deren Alkylierungsprodukte günstige Eigenschaften als Verlaufsmittel für Pulverlacke besitzen.

### Beschreibung der Erfindung

Gegenstand der Erfindung ist die Verwendung cyclische Iminoether-Gruppen enthaltender Verbindungen als Verlaufsmittel für Pulverlacke.

Die erfindungsgemäß einzusetzenden Verbindungen mit cyclischen Iminoether-Gruppen lassen sich in 4 Klassen einteilen:
I die Monomeren der Oxazoline oder Oxazine,
II die Alkylierungsprodukte oder Salze mit Protonsäuren dieser Monomere,
III Verbindungen mit mehreren cyclischen Iminoether-Gruppen im Molekül, sogenannten Bis- oder Oligooxazolinen,
IV die Alkylierungsprodukte der Bis- oder Oligooxazoline.

Die Verbindungen der Klasse I lassen sich durch die Formel I darstellen 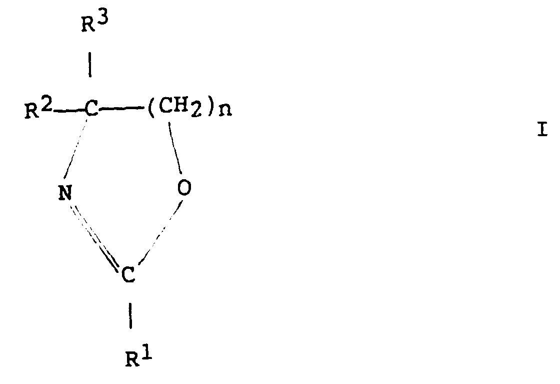 in der
R¹ einen gegebenenfalls hydroxysubstituierten Kohlenwasserstoffrest mit 1 bis 36 C-Atomen oder einen gegebenenfalls im aromatischen Kern substituierten Aryl- oder Aralkylrest bedeutet,
R² und R³ unabhängig voneinander einen Wasserstoff- oder einen Alkylrest mit 1 bis 4 C-Atomen bedeuten und
n einen Wert von 1 oder 2 annimmt.

Die Verbindungen der Klasse II lassen sich durch die Formel II darstellen 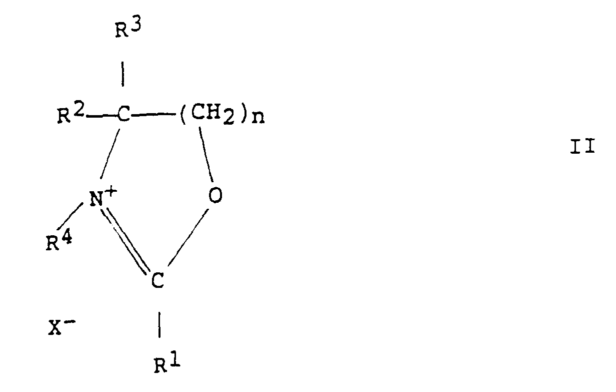 in der
R¹ einen gegebenenfalls hydroxysubstituierten Kohlenwasserstoffrest mit 1 bis 36 C-Atomen oder einen gegebenenfalls im aromatischen Kern substituierten Aryl- oder Aralkylrest bedeutet,
R² und R³ unabhängig voneinander einen Wasserstoff- oder einen Alkylrest mit 1 bis 4 C-Atomen bedeuten,
R⁴ einen Wasserstoff- oder einen gegebenenfalls aromatisch substituierten Alkylrest mit 1 bis 18 C-Atomen bedeutet,
X⁻ das Anion eines Halogenatoms oder einer Oxosäure der Halogene oder einer Oxosäure der Chalkogene oder einer organischen Sulfonsäure oder ein Tetrafluoroborat-Anion bedeutet, und n einen Wert von 1 oder 2 annimmt.

Der Rest R¹ kann Wasserstoff oder einen ggf. verzweigten Kohlenwasserstoffrest mit 1 bis 36 C-Atomen darstellen. Die entsprechenden Monomere sind beispielsweise unsubstituierte Oxazoline oder Oxazine oder Methyl-, Ethyl-, n-Propyl-, i-Propyl, n-Butyl-, i-Butyl, t-Butyl-, n-Pentyl-, n-Hexyl-, n-Heptyl-, 2-Ethylpentyl-, n-Octyl-, 2-Ethylhexyl-, n-Nonyl-, n-Undecyl-, n-Tridecyl-, n-Pentadecyl-, n-Heptadecyl-, i-Stearyl-, n-Nonadecyl- und n-Heneicosanyl- n-Tricosan-, n-Pentacosan-, n-Heptacosan-, n-Nonacosanoxazolin oder -oxazin.

Der Kohlenwasserstoffrest kann OH-substituiert sein und z.B. einen 5-Hydroxypentyl- oder 11-Hydroxy-8-heptadecenylrest darstellen.

Der Rest R¹ kann auch aromatische oder mit Alkylgruppen substituierte aromatische Reste darstellen, z.B. Phenyl-, Naphthyl-, 2-Methylphenyl-,4-Methylphenyl-, 4-t-Butylphenyl- oder 2-t-Butylphenylreste.

Auch andere Substituenten im aromatischen Kern, wie z.B. Halogengruppen, Hydroxylgruppen, Alkoxygruppen oder Nitrogruppen sind möglich.

Die Reste R² und R³ können unabhängig voneinander einen Wasserstoff- oder einen Alkylrest mit 1 bis 4 C-Atomen bedeuten. Verbindungen dieser Art entstehen, wenn substituierte Aminoalkohole wie z.B. das 2-Amino-2-methylpropan-1-ol mit Carbonsäuren unter Amidbildung und Cyclisierung umgesetzt werden.

Der Rest R⁴ kann einen Wasserstoff- oder einen gegebenenfalls aromatisch substituierten Alkylrest mit 1 bis 18 C-Atomen bedeuten. Verbindungen dieser Art, sogenannte Oxazolinium- oder Oxazinium-Salze, entstehen, wenn 2-Oxazoline oder Oxazine mit protischen Säuren oder Alkylierungsmitteln umgesetzt werden. Besonders bevorzugte Reste R⁴ sind Wasserstoff und Alkylreste mit 1 bis 4 C-Atomen.

X⁻ bedeutet das Anion eines Halogenatoms oder einer Oxosäure der Halogene oder einer Oxosäure der Chalkogene oder einer organischen Sulfonsäure oder ein Tetrafluoroborat-Anion. Besonders bevorzugte Anionen sind das Chloridanion, das Perchlorat-Anion oder das Anion der Toluolsulfonsäure oder Trifluormethansulfonsäure.

Die Verbindungen der Klasse III lassen sich durch die Formel III darstellen 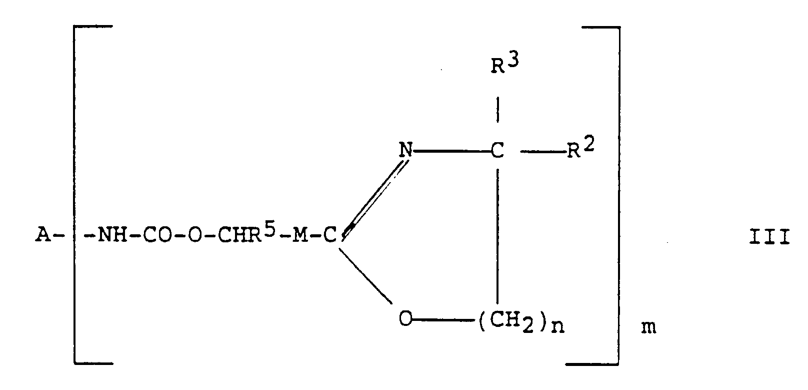 in der
A eine aliphatische, aromatische oder araliphatische Gruppe mit 4 bis 40 C-Atomen und m freien Valenzen an verschiedenen C-Atomen bedeutet,
m einen der Werte 2, 3 oder 4 hat,
n einen Wert von 1 oder 2 hat,
R² und R³ unabhängig voneinander einen Wasserstoff- oder einen Alkylrest mit 1 bis 4 C-Atomen bedeuten,
R⁵ ausgewählt ist aus der Gruppe H, Alkyl oder Alkenyl, M ausgewählt ist aus der Gruppe Alkylen, Alkenylen, Arylen und Alkarylen, wobei die Molekülteile R⁵ und M jeweils unabhängig voneinander 0 bis 12 C-Atome aufweisen.

Die Verbindungen der Klasse IV lassen sich durch die Formel IV darstellen 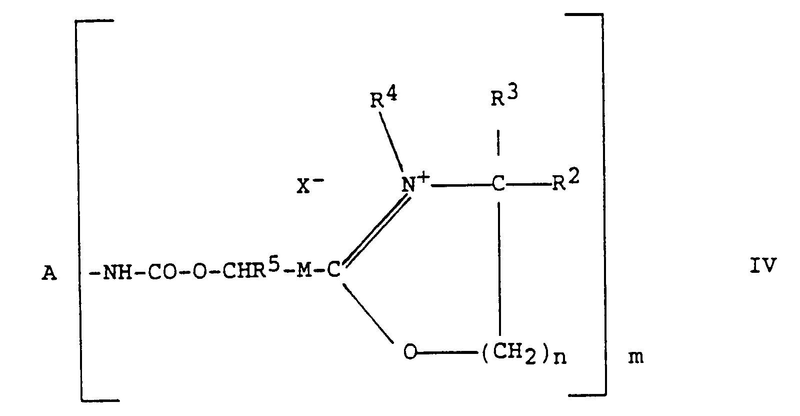 in der
A eine aliphatische, aromatische oder araliphatische Gruppe mit 4 bis 40 C-Atomen und m freien Valenzen an verschiedenen C-Atomen bedeutet,
m einen der Werte 2, 3 oder 4 hat,
n einen Wert von 1 oder 2 hat,
R² und R³ unabhängig voneinander einen Wasserstoff- oder einen Alkylrest mit 1 bis 4 C-Atomen bedeuten,
R⁴ einen Wasserstoff- oder einen gegebenenfalls aromatisch substituierten Alkylrest mit 1 bis 18 C-Atomen bedeutet,
X⁻ das Anion eines Halogenatoms oder einer Oxosäure der Halogene oder einer Oxosäure der Chalkogene oder einer organischen Sulfonsäure oder ein Tetrafluoroborat-Anion bedeutet,
R⁵ ausgewählt ist aus der Gruppe H, Alkyl oder Alkenyl, M ausgewählt ist aus der Gruppe Alkylen, Alkenylen, Arylen und Alkarylen, wobei die Molekülteile R⁵ und M jeweils unabhängig voneinander 0 bis 12 C-Atome aufweisen.

Für die Reste R² und R³ und R⁴ und X⁻ gilt das bei der Erläuterung der Formeln I und II ausgeführte.

Gemäß einer vorteilhaften Ausführungsform der Erfindung sind Verbindungen mit cyclischen Iminoether-Gruppen nach den Formeln I und II, bei denen n einen Wert von 1 annimmt und R² und R³ Wasserstoff bedeuten, bevorzugt, bei denen der Rest R₁ ein linearer oder verzweigter, gesättigter oder einfach ungesättigter Kohlenwasserstoffrest mit 7 bis 21 Kohlenstoffatomen, insbesondere ein linearer Kohlenwasserstoffrest mit 7 bis 17 Kohlenstoffatomen oder ein Phenylrest ist. Diese Oxazoline leiten sich von gesättigten oder einfach ungesättigten Fettsäuren natürlichen oder synthetischen Ursprungs (einschließlich technischer Gemische derselben) entsprechender Kettenlänge oder von Benzoesäure ab.

Typische Vertreter der vorstehend genannten natürlichen Fettsäuren sind Capryl-, Caprin-, Laurin-, Myristin-, Palmitin-, Stearin-, Arachin-, Lignocerin- und Behensäure, sowie 12-Hydroxystearin- und Ricinolsäure.
Auch die sogenannten Montansäuren können als Ausgangsmaterialien für Oxazoline verwendet werden.

Auch physikalische Gemische verschiedener Verbindungen mit cyclischen Iminoether-Gruppen sind einsetzbar.

Die Herstellung der Verbindungen nach Formel I kann nach den von S. Kobayashi und T. Saegusa in der Monographie "Ring Opening Polymerization", Hrsg. K.J. Ivin, T. Saegusa, Vol. 2, S. 761-790, London, Elsevier, 1984, beschriebenen Methoden oder nach dem Verfahren der EP-A1 315 856 und DE-A1 39 14 155 erfolgen.

Die Herstellung von Verbindungen nach Formel II, sogenannten Oxazolinium- oder Oxazinium-Salzen wird in der Encyclopedia of Polymer Science ans Technology, Supplement Vol 1, S. 223, Ed.: H.F. Mark, N.M. Bikales, 1976, Wiley, New York und der dort zitierten Literatur beschrieben. Bei der Synthese wird man im allgemeinen so vorgehen, daß das Alkylierungsmittel oder die Säure mit dem Oxazolin oder Oxazin bei Temperaturen von 20 bis 150 °C gemischt und für einen Zeitraum von 1 bis 24 h reagieren gelassen wird. Falls gewünscht kann ein geeignetes Lösungsmittel, wie z. B. Toluol, Xylol, Ethanol, Propanol, Isopropanol oder Aceton zugefügt werden. Auch eine lösungsmittelfreie Herstellung ist möglich. Die meist kristallinen Salze werden isoliert und falls erforderlich getrocknet.

Als Säuren oder Alkylierungsmittel können Verbindungen wie z.B. Halogenwasserstoffsäuren, Oxosäuren der Halogene wie Perchlorsäure, Oxosäuren der Chalkogene wie Schwefelsäure, organische Sulfonsäuren wie Toluolsulfonsäure oder deren Ester wie Methyltosylat und Methyltriflat sowie das Addukt von HF an Bortrifluorid eingesetzt werden.
Es ist aber auch möglich, Alkylhalogenide wie z.B. Methyliodid, Ethylbromid oder Benzylbromid zu verwenden.

Weiterhin können als Alkylierungsmittel Ester der Schwefelsäure wie z.B. Dimethylsulfat verwendet werden.

Besonders bevorzugt werden Toluolsulfonsäure und ihr Methyl-Ester, Trifluormethansäure und ihr Methyl-Ester und Perchlorsäure verwendet.

Die Herstellung von Verbindungen nach Formel III, wird in der deutschen Patentanmeldung DE-A1 39 15 874 beschrieben. Nach der Lehre dieser Schrift werden die Bisoxazoline bevorzugt durch Umsetzung von Ricinoloxazolin, das ist 11-Hydroxy-8-heptadecenyl-2-oxazolin, mit di- oder höherfunktionellen Isocyanaten hergestellt.

Die Herstellung von Verbindungen nach Formel IV erfolgt analog zu den Verfahren, die bei der Herstellung von Verbindungen nach Formel II beschrieben sind.

Die einzusetzenden Verbindungen mit cyclischen Iminoether-Gruppen eignen sich als Verlaufsmittel für Pulverlacke.

Pulverlacke werden im allgemeinen wie folgt hergestellt:
- Das Bindemittel wird mit Pigmenten, Härter und Additiven in einem Mischer intensiv homogenisiert.
   Als Additive kommen vor allem Verlaufshilfsmittel, Fettsäureester wie gehärtetes Ricinusöl, Mittel zur Verhinderung von Nadelstichen wie Benzoin, Mattierungsmittel wie Polyethylenwachse oder Kieselsäure, Härtungsbeschleuniger oder UV-Stabilisatoen in Betracht.
   Die zugefügten Mengen können je nach Anwendung zwischen 0,1 und 5 Gew.% bezogen auf den Pulverlack liegen.
   Obwohl die Additive üblicherweise als Einzelsubstanzen zugefügt werden, ist es selbstverständlich möglich, die verschiedenen Additive zu einem einzigen Compound mit der Bezeichnung Verlaufshilfsmittel zu mischen.
   Die Menge an Verbindungen mit cyclischen Iminoether-Gruppen, in diesem Compound kann zwischen 10 und 100, bevorzugt zwische 20 und 80 Gew.% bezogen auf Compound liegen.
- Die Mischung aus Bindemittel, Pigmenten und Additiven wird extrudiert.
- Das Extrudat wird grob und anschließend fein zu einem verarbeitungsfähigen Pulverlack vermahlen.

Die durch die einzusetzenden Verbindungen mit cyclischen Iminoether-Gruppen aus Monomereinheiten a) und/oder b) in ihren Verlaufseigenschaften zu verbessernden Pulverlacke enthalten thermoplastische oder duromere Kunstharze und 0,1 bis 2,0 Gew.-%, bevorzugt 0,5 bis 1 Gew.-% - bezogen auf das Gesamtgewicht der Pulverlacke - eines oder mehrerer der erfinderischen Verbindungen mit cyclischen Iminoether-Gruppen sowie gegebenenfalls Pigmente sowie übliche Additive wie Härtungsmittel, Härtungsbeschleuniger und UV-Stabilisatoren. Bevorzugt sind Pulverlacke auf Basis von Epoxiden für die Vernetzung mit carboxylfunktionellen Polyestern (sogenannte Hybridsysteme) sowie von carboxylfunktionellen Polyestern für die Vernetzung mit Triglycidylisocyanuraten.

Verlaufsmittel mit einem Gehalt an cyclischen Iminoether-Gruppen enthaltende Verbindungen der genannten klassen I bis IV zeichnen sich im wesentlichen durch leichte Verarbeitbarkeit zu Pulverlacken, z.B. beim Trockenmischen und Dosieren, in der höhere Lagerstabilität, z.B. kein Zusammenbacken, und in besseres Verlaufs-Verhalten aus. Dadurch werden nicht nur "Fischaugen", "Krater" und "Nadelstiche" vermieden sondern auch eine deutliche Verringerung des Orangenschaleneffektesftes erzielt.

Vor allem gestatten die einzusetzenden Verbindungen mit cyclischen Iminoether-Gruppen die Herstellung völlig schleierfreier Klarlackfilme und von glänzenden pigmentierten Filmen.

### Beispiele

Alle Prozentangaben in den Beispielen verstehen sich, sofern nicht anders angegeben, als Gewichtsprozent.

Die Produkte wurden folgendermaßen charakterisiert:
1. Der Schmelzbereich wurde mit einer Kofler-Heizbank oder über DSC (Differential Scanning Calorimetry) bestimmt.
2. Die OH-Zahl wurde nach DIN 53240 bestimmt.

### Beispiel 1:

### Heptadecyl-2-oxazolin, hergestellt nach EP-A1 315 856

### Beispiel 2:

### Heneicosanyl-2-oxazolin, hergestellt nach EP-A1 315 856

### Beispiel 3:

In einen 1 l Dreihalskolben mit Rührer, Innenthermometer, Tropftrichter, Rückflußkühler und Stickstoffeinleitung wurden 140,5 g Pentadecyloxazolin (0,5 mol) mit 330 g Isopropanol vermischt und über den Tropftrichter 56,6 ml Trifluormethansulfonsäureester (0,50 mol) zugegeben. Die Temperatur stieg dabei auf 52 °C. Es wurde 1 Stunde nachgerührt. Nach Zugabe von 300 ml Diethylether wurden die gebildeten Kristalle des Oxazolinium-Salzes abfiltriert und im Exsiccator getrocknet.

### Beispiel 4:

Analog zu Beispiel 1 wurde aus 140,5 g Pentadecyloxazolin (0,5 mol) und 93,1 g para-Toluolsulfonsäuremethylester (0,5 mol) ein Oxazolinium-Salz hergestellt.

### Beispiel 5:

Analog zu Beispiel 1 wurde aus 112,5 g Undecyloxazolin (0,5 mol) und 82,0 g Trifluormethansulfonsäureester (0,5 mol) ein Oxazolinium-Salz hergestellt.

### Beispiel 6:

In einen 1 l Dreihalskolben mit Rührer, Innenthermometer, Tropftrichter, Rückflußkühler und Stickstoffeinleitung wurden 92,7 g Heptadecyloxazolin (0,3 mol) mit 200 ml Toluol vermischt und über den Tropftrichter 55,9 g para-Toluolsulfonsäuremethylester (0,3 mol) zugegeben. Die Temperatur stieg dabei von Raumtemperatur auf 50 °C. Es wurde 3 Stunden bei einer Temperatur von 110 °C nachgerührt. Danach wurde das Toluol am Rotationsverdampfer abgezogen. Es resultierte ein weißes Wachs, das sich aus Aceton umkristallisiern ließ. Der Schmelzbereich lag zwischen 55 und 68 °C.

### Beispiel 7:

In einen 2 l Dreihalskolben mit Rührer, Innenthermometer, Tropftrichter, Rückflußkühler und Stickstoffeinleitung wurden 88,2 g Phenyloxazolin (0,6 mol) in 800 ml Isopropanol gelöst und über den Tropftrichter 86,1 g 70 %ige Perchlorsäure (0,6 mol) bei Raumtemperatur zugegeben. Nach Stehen über Nacht wurden die gebildeten Kristalle des Oxazolinium-Salzes abfiltriert und im Exsiccator getrocknet.
Der Schmelzbereich lag zwischen 130 und 147 °C.

### Beispiel 8:

Analog Beispiel 5 wurde aus 112,5 g Undecyloxazolin (0,5 mol) und 71,8 g 70 %iger Perchlorsäure (0,5 mol) ein Oxazolinium-Salz hergestellt.
Der Schmelzbereich lag zwischen 85 und 105 °C.

### Beispiel 9:

Aus 91,0 g eines nach DE-A1 39 15 874 hergestellten Bisoxazolins aus 2 mol Ricinoloxazolin und 1 mol Diphenylmethandiisocyanat (0,1 mol Oxazolingruppen) und 18,6 g para-Toluolsulfonsäuremethylester (0,1 mol) wurde analog Beispiel 3 ein Oxazolinium-Salz hergestellt.

### Anwendungstechnische Prüfung:

Zur Prüfung der Eignung der erfindungsgemäß einzusetzenden Verbindungen mit cyclischen Iminoether-Gruppen als Verlaufsmittel wurden diese in folgenden Pulverlacksystemen getestet.

### A Epoxid-Polyester-Lack (Hybrid-System)

Eine Pulverlackzusammensetzung aus 50 Gew.-Teilen eines Epoxidharzes I, 50 Gew.-Teilen eines Polyesterharzes II und 0,5 Gew.-Teilen Benzoin wurde unter Zusatz von 1 Gew.-Teil des zu prüfenden Verlaufmittels vermischt; die Mischung wurde anschließend extrudiert, granuliert, vermahlen und gesiebt. Die erhaltenen Pulverlacke wurden elektrostatisch auf eine Metalloberfläche gebracht und 12 min bei 180 °C eingebrannt. Das eingesetzte Epoxidharz war ein handelsübliches Produkt auf Basis von Bisphenol A und Epichlorhydrin. Das eingesetzte ölfreie Polyester-Harz war ebenfalls ein handelsübliches Produkt mit freien Carboxylgruppen. Die Harze hatten folgende Kenndaten:

| | I | II |
|---|---|---|
| Epoxid-Äquivalentgewicht | 715-835 | |
| Glasumwandlungstemperatur °C | - | 43-48 |
| Erweichungsbereich (Kofler) °C | 70-80 | 70-80 |
| Säurezahl (DIN 53402) | - | 65-80 |
| Schmelzviskosität Pa·s | | |
| (DIN 53229/160 °C/Kegelplatte) | - | 8-16 |
| (DIN 53735 21.2 N/120 °C | ca.50 | - |

Die Einbrennbedingungen waren 5 min bei 200 °C, 8 min bei 180 °C oder 17 min bei 165 °C (die angegebenen Temperaturen beziehen sich jeweils auf die Objekttemperatur).

### B Polyester-Lack

Analog zu der unter A beschriebenen Weise wurde aus 93 Gew.-Teilen eines Polyesterharzes (III) mit freien Carboxylgruppen und 7 Gew.-Teilen Triglycidylisocyanurat unter Zusatz von 1 Gew.-Teil Verlaufsmittel ein Pulverlack hergestellt und auf eine Metalloberfläche appliziert. Das Polyesterharz wies die folgenden Kenndaten auf:

| | III |
|---|---|
| Erweichungspunkt (Kofler) | 77-87 °C |
| Glasumwandlungstemperatur | 55-60 °C |
| Schmelzviskosität DIN 53229, 160 °C, | |
| Kegel/Platte | 30-60 Pa·s |
| Säurezahl DIN 53402 | 30-36 mg KOH/g |

Die Einbrennbedingungen waren 5 min bei 200 °C, 8 min bei 180 °C oder 17 min bei 165 °C (die angegebenen Temperaturen beziehen sich jeweils auf die Objekttemperatur).

Die Verlaufmittel gemäß den Beispielen ließen sich einwandfrei verarbeiten und blieben rieselfähig.

Die erhaltenen Klarlacke zeigten sichtbar keinerlei Trübung, selbst bei Schichtdicken von > 100 µm.

Die Ergebnisse der Verlaufprüfungen sind in der folgenden Tabelle dargestellt.

**Tabelle:**

| Lacksystem | Additiv | Bewertung | Trübung |
|---|---|---|---|
| | - | 5 | nein |
| A | Bsp 1 | 3 | nein |
| Polyester/ | Bsp 3 | 2-3 | nein |
| Epoxid | Bsp 5 | 4 | nein |
| | Bsp 6 | 2-3 | nein |
| | Bsp 9 | 4 | nein |
| | - | 5 | nein |
| B | Bsp 2 | 3 | nein |
| Polyester/ | Bsp 4 | 3 | nein |
| TGIC | Bsp 6 | 2-3 | nein |
| | Bsp 7 | 4 | nein |
| | Bsp 8 | 3-4 | nein |
| TGIC ist Trisglycydylisocyanurat | | | |

### Bewertung des Verlaufs:

0 hervorragender Verlauf, nahezu ebene Filmoberfläche
1 gut verlaufen, leichte Struktur,
2 mäßiger Verlauf, Orangenschalen-Effekt
3 wie 2, vereinzelt Nadelstiche, leichte Dellen
4 mäßiger Verlauf, vereinzelt Krater, viele Nadelstiche
5 schlechter Verlauf, viele Krater

## Patentansprüche

1. Verwendung cyclische Iminoether-Gruppen enthaltende Verbindungen als Verlaufsmittel für Pulverlacke, dadurch gekennzeichnet, daß man Verbindungen der allgemeinen Formel I, 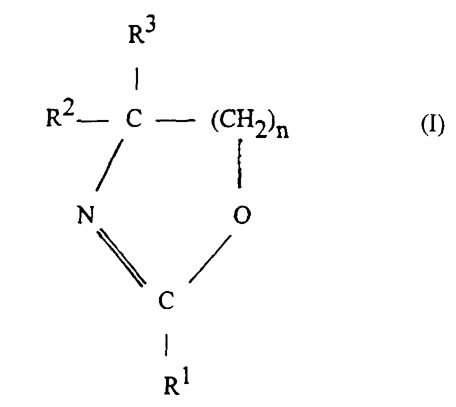 in der
R¹ einen gegebenenfalls hydroxysubstituierten Kohlenwasserstoffrest mit 1 bis 36 C-Atomen oder einen gegebenenfalls im aromatischen Kern substituierten Aryl- oder Aralkylrest bedeutet,
R² und R³ unabhängig voneinander einen Wasserstoff- oder einen Alkylrest mit 1 bis 4 C-Atomen bedeuten und
n einen Wert von 1 oder 2 annimmt,
einsetzt.

2. Verwendung nach Anspruch 1, dadurch gekennzeichnet, daß man Verbindungen der allgemeinen Formel II, 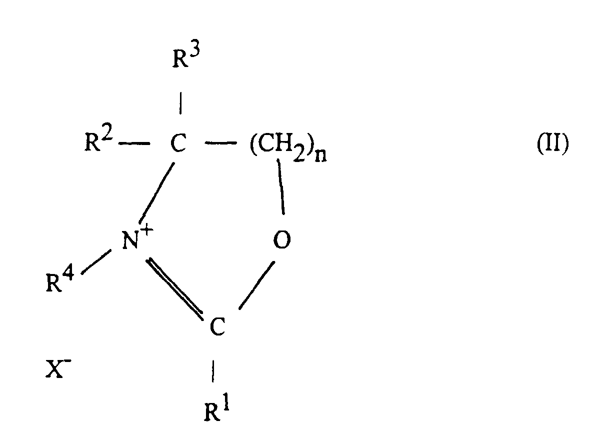 in der
R¹ einen gegebenenfalls hydroxysubstituierten Kohlenwasserstoffrest mit 1 bis 36 C-Atomen oder einen gegebenenfalls im aromatischen Kern substituierten Aryl- oder Aralkylrest bedeutet,
R² und R³ unabhängig voneinander einen Wasserstoff- oder einen Alkylrest mit 1 bis 4 C-Atomen bedeuten,
R⁴ einen Wasserstoff- oder einen gegebenenfalls aromatisch substituierten Alkylrest mit 1 bis 18 C-Atomen bedeutet,
X⁻ das Anion eines Halogenatoms oder einer Oxosäure der Halogene oder einer Oxosäure der Chalkogene oder einer organischen Sulfonsäure oder ein Tetrafluoroborat-Anion bedeutet,
und n einen Wert von 1 oder 2 annimmt,
einsetzt.

3. Verwendung nach Anspruch 1, dadurch gekennzeichnet, daß man Verbindungen der allgemeinen Formel III, 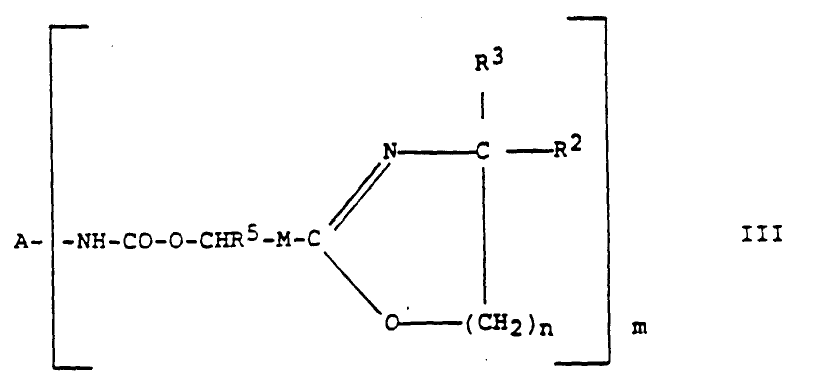 in der
A eine aliphatische, aromatische oder araliphatische Gruppe mit 4 bis 40 C-Atomen und m freien Valenzen an verschiedenen C-Atomen bedeutet,
m einen der Werte 2, 3 oder 4 hat,
n einen Wert von 1 oder 2 hat,
R² und R³ unabhängig voneinander einen Wasserstoff- oder einen Alkylrest mit 1 bis 4 C-Atomen bedeuten,
R⁵ ausgewählt ist aus der Gruppe H, Alkyl oder Alkenyl, M ausgewählt ist aus der Gruppe Alkylen, Alkenylen, Arylen und Alkarylen, wobei die Molekülteile R⁵ und M jeweils unabhängig voneinander 0 bis 12 C-Atome aufweisen,
einsetzt.

4. Verwendung nach Anspruch 1, dadurch gekennzeichnet, daß man Verbindungen der allgemeinen Formel IV, 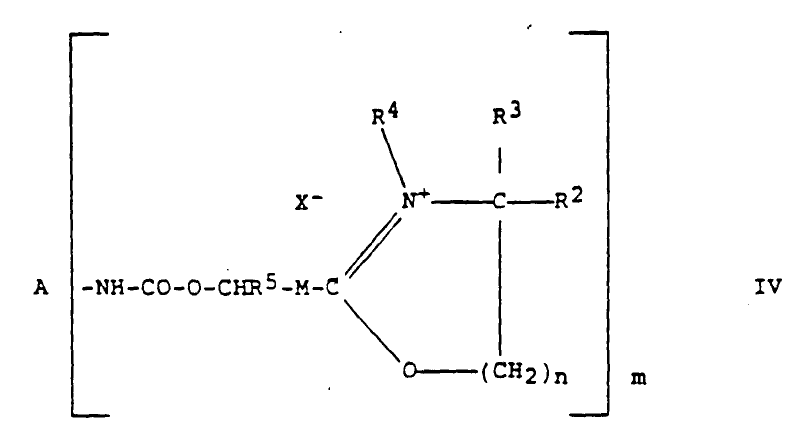 in der
A eine aliphatische, aromatische oder araliphatische Gruppe mit 4 bis 40 C-Atomen und m freien Valenzen an verschiedenen C-Atomen bedeutet,
m einen der Werte 2, 3 oder 4 hat,
n einen Wert von 1 oder 2 hat,
R² und R³ unabhängig voneinander einen Wasserstoff- oder einen Alkylrest mit 1 bis 4 C-Atomen bedeuten,
R⁴ einen Wasserstoff- oder einen gegebenenfalls aromatisch substituierten Alkylrest mit 1 bis 18 C-Atomen bedeutet,
X⁻ das Anion eines Halogenatoms oder einer Oxosäure der Halogene oder einer Oxosäure der Chalkogene oder einer organischen Sulfonsäure oder ein Tetrafluoroborat-Anion bedeutet,
R⁵ ausgewählt ist aus der Gruppe H, Alkyl oder Alkenyl, M ausgewählt ist aus der Gruppe Alkylen, Alkenylen, Arylen und Alkarylen, wobei die Molekülteile R⁵ und M jeweils unabhängig voneinander 0 bis 12 C-Atome aufweisen,
einsetzt.

5. Verwendung nach Anspruch 1, dadurch gekennzeichnet, daß in der Formel I R¹ einen linearen Kohlenwasserstoffrest mit 7 bis 21 C-Atomen oder einen Phenylrest, R² und R³ Wasserstoff und n einen Wert von 1 darstellt.

6. Verwendung nach Anspruch 2, dadurch gekennzeichnet, daß in der Formel II
R¹ einen linearen Kohlenwasserstoffrest mit 7 bis 21 C-Atomen oder einen Phenylrest, R² und R³ Wasserstoff, R⁴ Wasserstoff oder einen Methylrest, X⁻ ein Perchlorat-Anion oder das Anionder Toluolsulfonsäure oder Trifluormethansulfonsäure und n einen Wert von 1 darstellt.

7. Verwendung nach einem der Ansprüche 1 bis 6, dadurch gekennzeichnet, daß man das Verlaufshilfsmittel in einem Pulverlack auf Epoxidharzbasis einsetzt.

## Claims

1. The use of compounds bearing cyclic iminoether groups as flow controllers for powder lacquers, characterized in that compounds corresponding to general formula I: 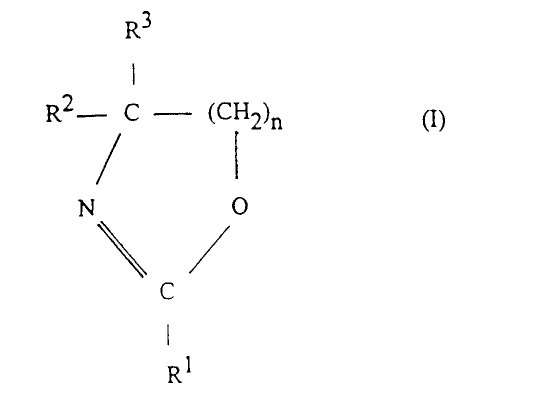 in which
R¹ is an optionally hydroxysubstituted hydrocarbon radical containing 1 to 36 carbon atoms or an aryl or aralkyl group optionally substituted in the aromatic nucleus,
R² and R³ independently of one another represent a hydrogen atom or an alkyl radical containing 1 to 4 carbon atoms and
n assumes a value of 1 or 2,
are used.

2. The use claimed in claim 1, characterized in that compounds corresponding to formula II: 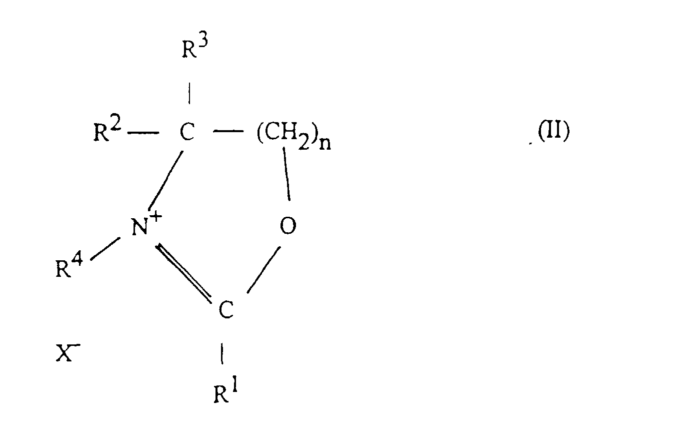 in which
R¹ is an optionally hydroxysubstituted hydrocarbon radical containing 1 to 36 carbon atoms or an aryl or aralkyl radical optionally substituted in the aromatic nucleus,
R² and R³ independently of one another represent a hydrogen atom or an alkyl radical containing 1 to 4 carbon atoms,
R⁴ is a hydrogen atom or an optionally aromatically substituted alkyl radical containing 1 to 18 carbon atoms,
X⁻ is the anion of a halogen atom, of an oxo acid of the halogens, of an oxo acid of the chalkogens or of an organic sulfonic acid or a tetrafluoroborate anion and
n assumes a value of 1 or 2,
are used.

3. The use claimed in claim 1, characterized in that compounds corresponding to formula III: 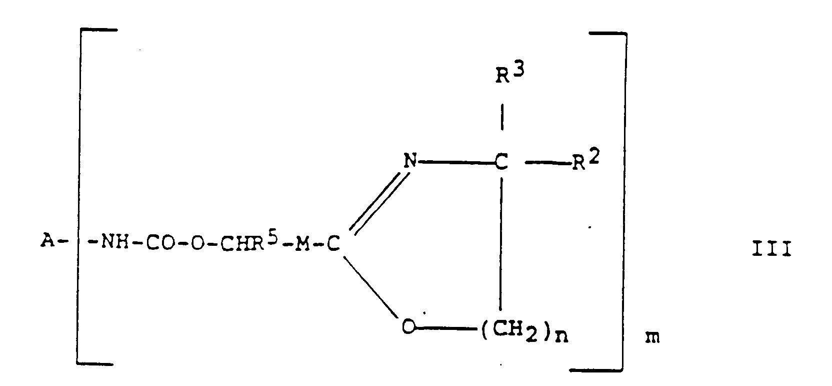 in which
A is an aliphatic, aromatic or araliphatic group containing 4 to 40 carbon atoms and m represents free valencies at various carbon atoms,
m has one of the values 2, 3 or 4,
n has a value of 1 or 2,
R² and R³ independently of one another represent a hydrogen atom or an alkyl radical containing 1 to 4 carbon atoms,
R⁵ is selected from the group consisting of H, alkyl or alkenyl and M is selected from the group consisting of alkylene, alkenylene, arylene and alkarylene, R⁵ and M independently of one another containing 0 to 12 carbon atoms,
are used.

4. The use claimed in claim 1, characterized in that compounds corresponding to formula IV: 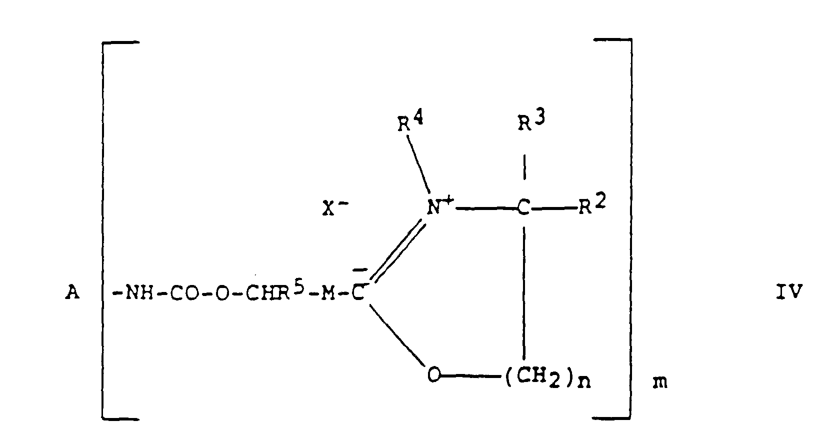 in which
A is an aliphatic, aromatic or araliphatic group containing 4 to 40 carbon atoms and m represents free valencies at various carbon atoms,
m has one of the values 2, 3 or 4,
n has a value of 1 or 2,
R² and R³ independently of one another represent a hydrogen atom or an alkyl radical containing 1 to 4 carbon atoms,
R⁴ is a hydrogen atom or an optionally aromatically substituted alkyl radical containing 1 to 18 carbon atoms,
X⁻ is the anion of a halogen atom, of an oxo acid of the halogens, of an oxo acid of the chalkogens or of an organic sulfonic acid or a tetrafluoroborate anion, R⁵ is selected from the group consisting of H, alkyl or alkenyl and M is selected from the group consisting of alkylene, alkenylene, arylene and alkarylene, R⁵ and M independently of one another containing 0 to 12 carbon atoms,
are used.

5. The use claimed in claim 1, characterized in that, in formula I, R¹ is a linear hydrocarbon radical containing 7 to 21 carbon atoms or a phenyl radical, R² and R³ represent hydrogen and n has a value of 1.

6. The use claimed in claim 2, characterized in that, in formula II, R¹ is a linear hydrocarbon radical containing 7 to 21 carbon atoms or a phenyl radical, R² and R³ represent hydrogen, R⁴ is hydrogen or a methyl radical, X⁻ is a perchlorate anion or the anion of toluene sulfonic acid or trifluoromethane sulfonic acid and n has a value of 1.

7. The use claimed in any of claims 1 to 6, characterized in that the flow controller is used in an epoxy-resin-based powder laquer.

## Revendications

1. Utilisation de composés renfermant des groupes iminoéther cycliques, comme produits nivelants pour les laques en poudre, caractérisée en ce que l'on met en oeuvre des composés de la formule générale I, 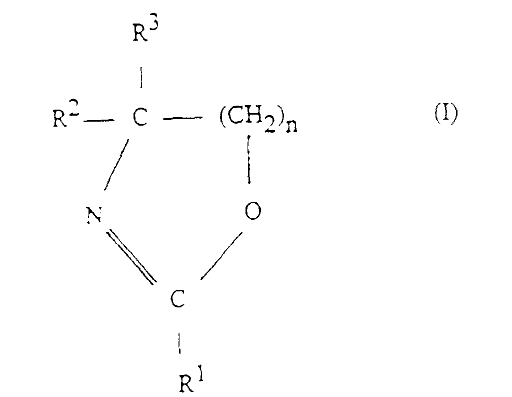 dans laquelle
R¹ représente un radical hydrocarboné, le cas échéant hydroxy-substitué, comportant 1 à 36 atomes de C ou un radical aryle ou aralkyle éventuellement substitué dans le cycle aromatique,
R² et R³ correspondent indépendamment l'un de l'autre à un radical hydrogène ou alkyle présentant 1 à 4 atomes de C et n possède une valeur de 1 ou de 2.

2. Utilisation selon la revendication 1, caractérisée en ce que l'on met en oeuvre des composés de la formule générale II, 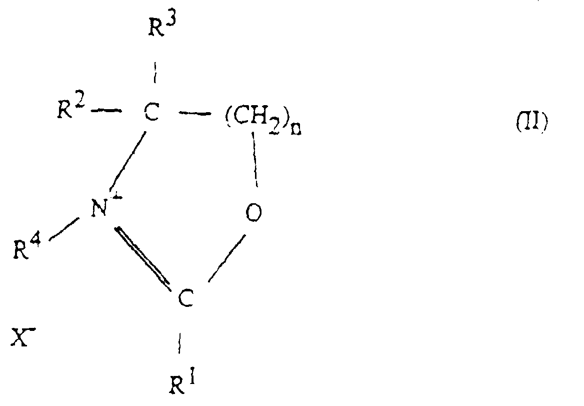 dans laquelle
R¹ représente un radical hydrocarboné, le cas échéant hydroxy-substitué, comportant 1 à 36 atomes de C ou un radical aryle ou aralkyle éventuellement substitué dans le cycle aromatique.
R² et R³ correspondent indépendamment l'un de l'autre à un radical hydrogène ou alkyle présentant 1 à 4 atomes de C
R⁴ représente un radical hydrocarboné ou un radical alkyle éventuellement à substitution aromatique, possédant 1 à 18 atomes de C,
X⁻ est l'anion d'un atome d'halogène ou d'un oxyacide d'halogènes ou d'un oxyacide de chalcogènes ou d'un acide sulfonique organique, ou un anion de tétrafluoroborate, et n possède une valeur de 1 ou de 2.

3. Utilisation selon la revendication 1, caractérisée en ce que l'on met en oeuvre des composés de la formule générale III, 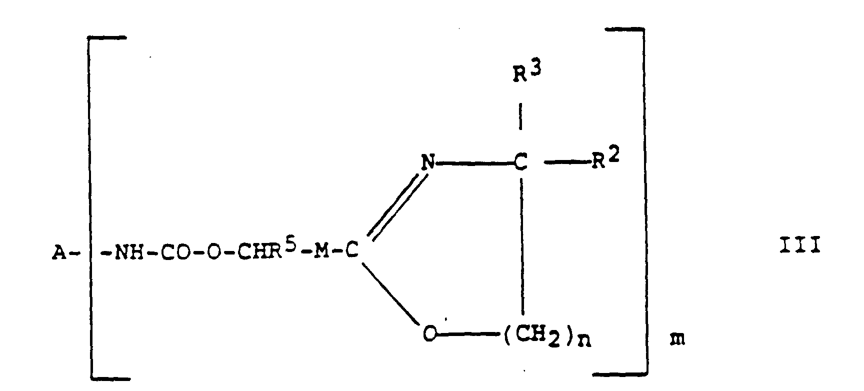 dans laquelle
A représente un groupe aliphatique, aromatique ou araliphatique comportant 4 à 40 atomes de C, et m correspond aux valences libres de différents atomes de C,
m correspond aux valeurs 2, 3 ou 4,
n possède une valeur de 1 ou de 2,
R² et R³ représentent indépendamment l'un de l'autre un radical hydrogène ou un radical alkyle possédant 1 à 4 atomes de C,
R⁵ est sélectionné parmi le groupe H, alkyle ou alcényle, M est sélectionné parmi le groupe alkylène, alcényléne, arylène et alkarylène, les fractions moléculaires R⁵ et M représentant chacune indépendamment de l'autre 0 à 12 atomes de C.

4. Utilisation selon la revendication 1, caractérisée en ce que l'on met en oeuvre des composés de la formule générale IV, 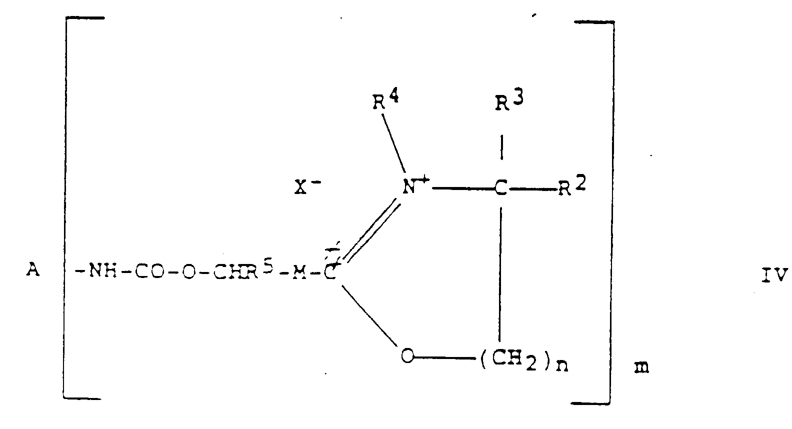 dans laquelle
A représente un groupe aliphatique, aromatique ou araliphatique comportant 4 à 40 atomes de C, et m correspond aux valences libres de différents atomes de C,
m correspond aux valeurs 2, 3 ou 4,
n possède une valeur de 1 ou de 2,
R² et R³ représentent indépendamment l'un de l'autre un radical hydrogène ou un radical alkyle possédant 1 à 4 atomes de C,
R⁴ est un radical hydrogène ou un radical alkyle le cas échéant à substitution aromatique comportant 1 à 18 atomes de C,
X⁻ est l'anion d'un atome d'halogène ou d'un oxyacide d'halogènes ou d'un oxyacide de chalcogénes ou d'un acide sulfonique organique, ou un anion de tétrafluoroborate.
R est sélectionné parmi le groupe H, alkyle ou alcényle, M est sélectionné parmi le groupe alkyléne, alcénylène, arylène et alkarylène, les fractions moléculaires R⁵ et M représentant chacune indépendamment de l'autre 0 à 12 atomes de C.

5. Utilisation selon la revendication 1, caractérisée en ce que dans la formule 1, R¹ représente un radical hydrocarboné linéaire comportant 7 à 21 atomes de C ou un radical phényle, R² et R³ correspondent à l'hydrogène et n possède une valeur de 1.

6. Utilisation selon la revendication 2, caractérisée en ce que dans la formule II, R¹ représente un radical hydrocarboné linéaire comportant 7 à 21 atomes de C ou un radical phényle, R² et R³ correspondent à l'hydrogène, R⁴ est un radical hydrogène ou méthyle, X⁻ représente un anion perchlorate ou l'anion de l'acide toluènesulfonique ou trifluorométhanesulfonique, et n possède une valeur de 1.

7. Utilisation selon une des revendications 1 à 6, caractérisée en ce que l'on met en oeuvre le produit nivelant dans une laque en poudre à base de résine époxyde.
